Europäisches Patentamt

European Patent Office

Office européen des brevets

(19)

(11) Publication number: **0 357 580**

A2

# EUROPEAN PATENT APPLICATION

(12)

(21) Application number: **89850279.4**

(22) Date of filing: **30.08.89**

(51) Int. Cl.5: **F 16 D 67/04**
**B 60 K 17/28**

(30) Priority: **31.08.88 FI 884005**

(43) Date of publication of application:
**07.03.90 Bulletin 90/10**

(84) Designated Contracting States: **DE FR GB SE**

(71) Applicant: **Valmet Oy**
**Punanotkonkatu 2**
**SF-00130 Helsinki 13 (FI)**

(72) Inventor: **Vilén, Bengt**
**Sävstaholmsvägen 6**
**S-63347 Eskilstuna (SE)**

(74) Representative: **Rostovanyi, Peter et al**
**AWAPATENT AB Box 5117**
**S-200 71 Malmö (SE)**

(54) Coupling for power take-off shaft.

(57) The invention relates to a coupling for a power take-off shaft, especially for a power take-off shaft (50) for a power take-off gear of a tractor or a corresponding work machine, which power take-off gear comprises a reduction gear. The power to be supplied for the shaft (20) of the reduction gear is supplied from an incoming shaft (11) via a hydraulic coupling (14), which can be locked in place by means of a pressure medium by a piston device (22, 30) or the like. The system also comprises a brake device (15, 40, 25), which is arranged to stop the power take-off shaft (50) when the coupling (14) is released. In accordance with the invention, the brake device (15, 40, 25) comprises a disc brake (15, 40, 25), which is arranged to stop the rotation of the hub piece (17) of the coupling, when the coupling pressure of the coupling is released from the piston device (24, 27, 30).

FIG.1

EP 0 357 580 A2

## Description

## COUPLING FOR POWER TAKE-OFF SHAFT

This invention relates to a coupling for a power take-off shaft, especially for a power take-off shaft for a power take-off gear of a tractor or a corresponding work machine, which power take-off gear comprises a reduction gear, to whose shaft power is supplied from an incoming shaft via a hydraulic coupling, which can be locked in place by means of a pressure medium by a piston device or the like and a brake device, which is arranged to stop the power take-off shaft when the coupling is released.

Tractors, work machines and the like are in a known way provided with a power take-off gear for work machines or the like, which can be connected to these, through which power take-off shaft the effects needed are transmitted from the tractor to the work machine or the like, which are connected to these. The power take-off gear is normally furnished with a reduction gear system to make the power take-off shaft rotate at a suitable speed, which is dependent on the number of revolutions of the tractor's motor. The power take-off gear is provided with a coupling, by means of which the power take-off shaft is caused to rotate, when desired, and by means of which the power take-off shaft can be stopped, when power is not to be transmitted to the work machine, which has been connected to the tractor, or when no work machine is connected to the tractor.

In connection with known power take-off gears, which are furnished with a hydraulic coupling, an essential problem exists as to how the rest moment going through the coupling can be eliminated and how the power take-off shaft can be stopped, when the coupling is released. Said rest moment, which can in certain situations be quite considerable, if formed by oil, which greases and cools the coupling. For reasons of safety at work, it must be possible to stop the power take-off shaft, when the coupling is released.

Previously known power take-off gears are provided with an arrangement of a different kind for braking the power take-off shaft in such a way that it will stop when the coupling is released. According to a known solution, the shaft of the power take-off gear is stopped in such a way that the tension on the conic bearing of the shaft increases to such an extent that the power take-off shaft stops when the coupling is released. Increasing the tension on the bearings can take place for example by means of a piston, which affects in the axial direction of the pressure oil and bearings in such a way that said piston increases the bearing tension, when the coupling is released. An essential drawback of this previously known solution can be regarded to be such that the realization of the solution is very complicated and that the manufacturing costs of the gear are hereby very high.

In a known power take-off gear, the shaft in the power take-off gear is provided with a brake, which in engaged when the coupling of the power take-off gear is released. The most essential drawback of this system is the fact that it is expensive.

Common for the solutions in accordance with the technique described previously is that they require that the functions outside the power take-off gear make the power take-off shaft, e.g. solenoid valves, stop. For this reason, these devices require very complicated electric and hydraulic couplings with respect to the tractor drive, on the basis of which the device has many positions, which are likely to be dislocated, which can in turn affect adversely the operation of the device. In addition to this, the price for the equipment is essentially higher e.g for the driving devices, which are located outside the power take-off gear, e.g the solenoid valves.

The purpose of the present invention is to achieve a solution, by meas of which the drawbacks related to the known art can be eliminated and by means of which an improvement can be achieved in relation to the known art, especially in relation to the functionability and control of the device. For realizing this, the invention is basically characterized in that the brake device comprises a disc brake, which is arranged to stop the rotation of the hub piece of the coupling, when the coupling pressure of the coupling is released from the piston device.

The most purposeful advantage of the invention in relation to the known solutions can be considered to be the fact that the arrangement according to the invention is essentially more simple than the known solutions, because the invention dos not require any functional devices in addition to the power take-off gear. The functional and operational safety of the device can hereby be considered to be essentially better than that in the known devices. Because of the this, the solution according to the invention is more economical than that according to the known art. Other advantages and features of the invention are illustrated in the following description, where the invention will be described in more detail. The invention is not to be regarded to be limited to this description only.

In the following, the invention will be described with reference to the appended drawing.

Figure 1 is a schematic axial horizontal section of a power take-off gear, which is provided with a coupling according to the invention.

Figure 2 is a partial sectional view from above, which represents a detail of the brake device of the power take-off gear.

Figure 3 is a schematic end view of the power take-off gear seen from the left in Figure 1.

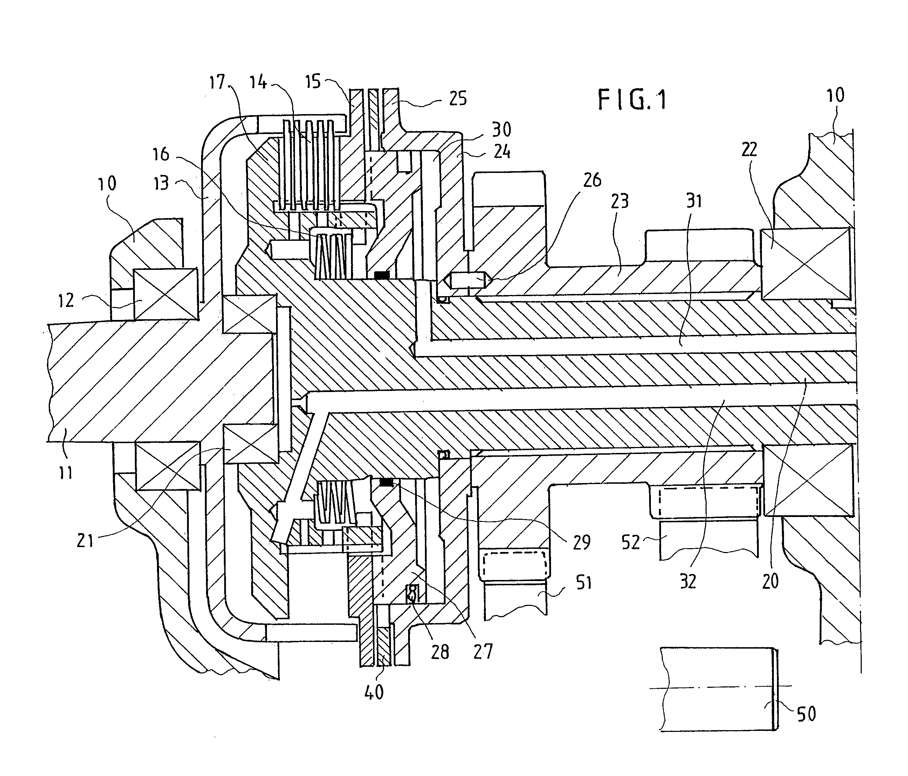

In the solution according to the figures of the drawing, power to the power take-off gear is transmitted from the engine of the tractor or the like by an incoming shaft 11, which is pivoted at the head 10 of the power take-off gear by means of a bearing 12. Power from the incoming shaft 11 is transmitted via a hydraulic multiple-plate coupling 14 to the shaft 20 of the reduction gear of the power take-off gear, whereby the shaft in accordance with the figures of this embodiment is provided with a first bearing 21 at the end of the incoming shaft 11 and at the opposite end with a second bearing 22 for the head 10 of the power take-off gear. From the shaft 20 of the reduction gear power is further transmitted to the power take-off shaft 50 via a gear device. The gear device comprises a gear wheel unit 23, which is arranged to rotate in connection with the shaft of the reduction gear with said shaft 20, which unit includes two gear wheels. On the power take-off shaft 50 are in turn arranged a first and a second gear wheel 51 and 52 in mesh with a gear wheel unit 23, which can be alternatively connected to the power take-off shaft 50 in such a way that the power take-off shaft 50 rotates according to a rotational speed required by one of the gear wheels 51, 52. In Figure 1, the power take-off shaft 50 and the gear wheels 51 and 52 located on the shaft are illustrated only partially, and the coupling devices of said gear wheels 51, 52 have been left off the Figures, because they do not form part of the present invention.

On the side of the reduction gear shaft 20 of the multiple-plate coupling is formed a hub piece for the coupling, to which coupling plates of the multiple-plate coupling 14 are arranged to move in the axial direction. Every other coupling plate of the multiple-plate coupling 14 is arranged to rotate with said hub piece 17. At the end of the incoming shaft 11, a cup-shaped flange piece 13 has, in turn, been formed, with which the other coupling discs of the multiple-plate coupling 14 are axially movably in contact in such a way that said coupling plates rotate with the cup-shaped flange part 13. Then, power from the incoming shaft 11 and the cup-shaped flange part 13, which rotates with it via the plates of the multiple-plate coupling, to the hub piece 17 of the coupling, when the multiple-plate coupling 14 is pressed in place, whereby the shaft 20 of the reduction gear rotates at the same speed as the incoming shaft 11.

For connecting the multiple-plate coupling 14 in place, a piston drum 24 is mounted on the shaft 20 of the reduction gear, which is stretched on the shaft 20 of the reduction gear in such a way that it rotates with the shaft 20 of the reduction gear. On the basis of this, said piston drum 24 is fastened e.g. by means of a fastening element 26 on the gear-wheel unit 23. Inside the piston drum 24 is arranged a piston 27 moving in the axial direction, which piston is sealed with a first sealing 28 to the piston drum 24 and with a second sealing 29 to the shaft 20 of the reduction gear in such a way that a closed intermediate space 30 remains between the piston drum 24 and the piston 27, whereby the piston 27 in Figure 1 can be caused to move to the left against the multiple-plate coupling 14 by leading the pressure medium to the intermediate space 30 in such a way that the coupling is coupled in place. Between the coupling plates of the multiple-plate coupling 14 and the piston 27 is arranged an intermediate plate 15 rotating with the hub piece 17, against which the piston 27 is pressed when locking the coupling in place. Said intermediate plate 15 presses hereby the coupling plates of the multiple-plate coupling 14 against each other. The pressure medium is lead along a pressure channel, which has been formed on the shaft of the reduction gear in the intermediate space 30 between the piston drum 30 and the piston 27. When the pressure from the intermediate space 30 is released, the valve 27 in Figure 1 will move to the right, whereby the pressure between the plates of the multiple-plate coupling 14 decreases and the coupling is released.

When the pressure has been released from the intermediate space 30, the coupling 14 is now disengaged, whereby the power take-off shaft 50 is stopped. As described above, a rest moment caused by oil prevails in the coupling 14, which oil lubricates and the cools off the coupling 14. Said cooling and lubricating oil is supplied to the multiple-plate coupling 14 along an axial lubrication channel 32 formed on the shaft 20 of the reduction gear as well as along transverse holes connected to the same. Because of this, in conventional solutions, the rest moment should result in that the rotation of the power take-off shaft 50 will continue. In the solution according to the invention, said rest moment has however been eliminated as follows.

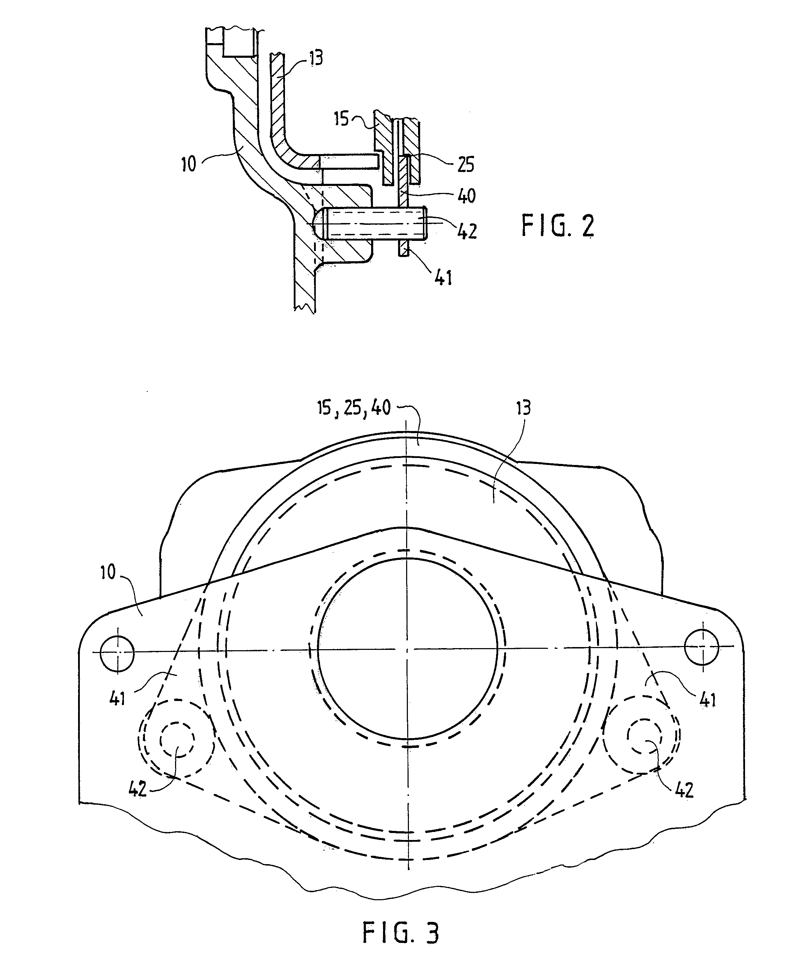

In accordance with the invention, the hub piece 17 of the coupling is provided with one or more springs, e.g. with plate springs 16 according to Fig. 1, which firstly contact the hub piece 17 of the coupling and secondly the intermediate piece 15 and push said intermediate plate 15 against the pressure direction of the piston 27. When the pressure from the intermediate space 30 has been released, the plate springs 16 push hereby the intermediate plate 15 and the piston 27 to the right in accordance with Fig. 1, whereby the plates of the multiple-plate coupling 14 will be released from contact with each other. In the piston drum 24 is formed a flange 25 and in said flange 25 as well as the intermediate plate 15 is arranged a brake disc 40, which does not rotate but moves in the axial direction. The intermediate plate 15, the flange 25 of the piston drum and brake disc 40 are arranged in such a way in relation to each other that when the pressure is released from the intermediate space 30, the plate springs 16 press said intermediate plate 15, the flange 25 of the piston drum and the brake disc 40 so that they are fastened to each other, whereby the shaft of the reduction gear will stop. The brake disc 40 is arranged in a non-rotational way illustrated e.g. in Fig. 2 and 3 in such a way that the taps 42 fastened on the head of the power take-off gear in the direction of the reduction gear and the back stop 41 are formed on the brake disc 40, in whose holes said taps 42 are arranged in such a way that the brake disc 40, supported by said taps 42, will move in the axial direction.

The spring or the springs arranged in the hub piece 17 of the coupling, e.g. the plate springs 16 in accordance with Fig. 1, are dimensioned so that when the coupling 14 is released, power pressing the intermediate plate 15 of the springs 16 and the flange 25 of the piston drum is capable of covering the rest moment going through the coupling 14 and keeping the power take-off shaft 50 stopped. The brake device comprising the intermediate plate 15, the plate springs 16, the brake disc 40 and the flange 25 of the piston drum will thus not seize in a situation, where a device provided with a high moment of inertia is connected to the power take-off shaft. When such a device connected to the power take-off shaft 50 is caused to rotate at a certain speed and when the coupling 14 is disengaged in such a situation, the brake device cannot now and cannot even tend to stop the rotation of the device connected to the power take-off shaft 50.

The brake device is only able to the keep the power take-off shaft 50 stopped, when no device is connected to the power take-off shaft. In the embodiment in accordance with the figures, no special friction material has been used on the braking surfaces of the brake device, but the braking surfaces of the intermediate plate 15, the flange 25 of the piston drum and the brake disc 50 are e.g formed of steel. However, it is possible to use friction material, and one or more of the braking surfaces can thus be furnished with a suitable friction material, when necessary.

The invention has above been described by way of an example only with reference to the appended drawing. It should be understood that the invention is not limited to relate to the example illustrated in the figures, but many modifications in the scope of the following patent claims are possible.

## Claims

1. Coupling for a power take-off shaft, especially for a power take-off shaft (50) for a power take-off gear of a tractor or a corresponding work machine, which power take-off gear comprises a reduction gear, whereby the power to be supplied for the shaft (20) of the reduction gear is supplied from an incoming shaft (11) via a hydraulic coupling (14), which can be locked in place by means of a pressure medium by a piston device or the like and a brake device (15, 40, 25), which is arranged to stop the power take-off shaft (50) when the coupling (50) is released, characterized in that the brake device (15, 40, 25) comprises a disc brake (15, 40, 25), which is arranged to stop the rotation of the hub piece (17) of the coupling, when the coupling pressure of the coupling is released from the piston device (24, 27, 30).

2. Coupling according to Claim 1, characterized in that the disc brake (15, 40, 25) is arranged between the intermediate plate (15) rotating with the hub piece (17) of the coupling and the piston device (24, 27, 30), which (24, 27, 39) rotates with the shaft (20) of the reduction gear and which intermediate plate is located against the coupling plates of the coupling (14).

3. Coupling according to Claim 1 or 2, characterized in that the disc brake (15, 40, 25) comprises a non-rotational brake disc (40) moving in the axial direction, which is arranged to move freely in the axial direction between the intermediate plate (15) of the coupling and the flange (25) formed in the piston drum (24) included in the piston device (24, 27, 30) in such a way that when the coupling pressure of the coupling (14) is released, the brake disc (40) is arranged to be pressed between said intermediate plate (15) and the flange (25) and to stop the rotation of the piston device (24, 27, 30).

4. Coupling according to any of the preceding Claims, characterized in that the disc brake (15, 40, 25) is arranged to lock with a spring power by means of a spring/springs (16) acting in the axial direction.

5. Coupling according to Claim 4, characterized in that the spring/springs (16) is arranged/are arranged on the hub piece (17) of the coupling to affect the intermediate plate (15) of the coupling in an opposite direction in relation to the power caused by the coupling pressure.

6. Coupling according to Claim 4 or 5, characterized in that the spring/springs (16) is/are a plate spring/plate springs.

7. Coupling according to any of the preceding Claims, characterized in that the coupling is a multiple-plate coupling.

8. Coupling according to any of the preceding Claims, characterized in that at least one of the braking surfaces of the disc brake (15, 40, 25) is provided with a friction material for improving the braking effect.

FIG.1

FIG. 2

FIG. 3